(19) Europäisches Patentamt
European Patent Office
Office européen des brevets

(11) **EP 4 683 270 A1**

(12) **EUROPEAN PATENT APPLICATION**

(43) Date of publication:
21.01.2026 Bulletin 2026/04

(21) Application number: 25187015.0

(22) Date of filing: 02.07.2025

(51) International Patent Classification (IPC):
*H04L 9/08* (2006.01)

(52) Cooperative Patent Classification (CPC):
H04L 9/0841

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 05.07.2024 US 202463667976 P

(71) Applicant: GOOGLE LLC
Mountain View CA 94043 (US)

(72) Inventors:
• Berkman, Omer
Tel Aviv (IL)
• David, Liron
Tel Aviv (IL)
• Yung, Marcel M. M.
New York (US)

(74) Representative: Maikowski & Ninnemann
Patentanwälte Partnerschaft mbB
Postfach 15 09 20
10671 Berlin (DE)

(54) **PIGGYBACKING MULTIPLE RECEIVERS ON A CRYPTOGRAPHIC VALUE**

(57) Techniques and apparatuses are described for piggybacking multiple receivers on a cryptographic value. In example aspects, an agent generates a reusable key based on a cryptographic value that is also known by the owner. To establish secure communications to the owner through multiple receivers, the reusable key acts as a public key for the decryption performed by the second receiver. Additionally, the reusable key acts as a public key for the encryption performed by the first receiver. In this sense, the first receiver and the second receiver are piggybacking on the cryptographic value generated by the transmitter. This piggybacking enables a first message to be transmitted by the agent with a single group element. With the single group element, the first message can be readily transmitted using wireless communication technologies with relatively small message sizes, such as Bluetooth™ low energy, without using fragmentation.

FIG. 2

EP 4 683 270 A1

## Description

### CROSS-REFERENCE TO RELATED APPLICATION(S)

This application claims the benefit of U.S. Provisional Patent Application Serial No. 63/667,976 filed on July 5, 2024, the disclosure of which is incorporated by reference herein in its entirety.

### BACKGROUND

Some electronic devices can use radio-frequency (RF) signals to communicate information. These radio-frequency signals enable users to talk with friends, download information, share pictures, make an electronic payment, remotely control household devices, and so forth. It can be challenging to protect the information carried by the radio-frequency signals from a third party. Without appropriate security measures, the third party can extract information from the radio-frequency signals and use this information to impersonate the user, gain unauthorized access to the network, eavesdrop on a conversation, invade a user's privacy, perform disruptive or illegal acts under the user's identity, and so forth.

### SUMMARY

Techniques and apparatuses are described for piggybacking multiple receivers on a cryptographic value. In example aspects, an agent (e.g., a transmitter) generates a cryptographic value that is based on a shared secret with an owner. The agent uses the cryptographic value to generate a reusable key. To establish secure communications to the owner through multiple receivers, the reusable key acts as a public key for the decryption performed by the second receiver. Additionally, the reusable key acts as a public key for the encryption performed by the first receiver. In this sense, the first receiver and the second receiver are piggybacking on the cryptographic value generated by the transmitter. This piggybacking enables a first message to be transmitted by the agent with a single group element (e.g., the reusable key), which can substantially decrease a size of the first message compared to other techniques that involve transmitting multiple group elements (e.g., a first public key for the encryption performed by the first receiver and a second public key for the decryption performed by the second receiver). With the single group element, the first message can be transmitted using wireless communication technologies with relatively small message sizes, such as Bluetooth™ low energy.

Aspects described below include a method performed by an agent (e.g., a transmitter) for piggybacking multiple receivers on a cryptographic value. The method includes establishing a shared secret with an owner of the agent. The method also includes generating a cryptographic value using a pseudorandom function and the shared secret. The method additionally includes generating a reusable key based on the cryptographic value. The method further includes broadcasting a message comprising the reusable key. The reusable key to be used by a first receiver for encryption and forwarded by the first receiver to a second receiver, the reusable key to be used by the second receiver for decryption.

Aspects described below include a method performed by a first receiver (e.g., a sighter) for piggybacking multiple receivers on a cryptographic value. The method includes receiving, from an agent, a first message comprising encrypted first information and a reusable key. The reusable key is derived from a shared secret between the agent and an owner. The method also includes encrypting second information using the reusable key. The method additionally includes forwarding the first message to a second receiver. The method further includes transmitting the encrypted second information to the second receiver.

Aspects described below also include an apparatus comprising a transceiver and a processor. The apparatus is configured to perform any of the described methods using the transceiver and the processor.

Aspects described below include a computer-readable storage medium comprising computer-executable instructions that, responsive to execution by a processor, cause a device to perform any one of the described methods.

Aspects described below also include a system with means for piggybacking multiple receivers on a cryptographic value.

### BRIEF DESCRIPTION OF DRAWINGS

Apparatuses for and techniques for piggybacking multiple receivers on a cryptographic value are described with reference to the following drawings. The same numbers are used throughout the drawings to reference like features and components:

FIG. 1 illustrates an example environment in which piggybacking multiple receivers on a cryptographic value can be implemented;
FIG. 2 illustrates example cryptographic keys for piggybacking multiple receivers on a cryptographic value;

FIG. 3 illustrates example transactions for piggybacking multiple receivers on a cryptographic value;

FIG. 4 illustrates a first example method for performing an aspect of piggybacking multiple receivers on a cryptographic value;

FIG. 5 illustrates a second example method for performing an aspect of piggybacking multiple receivers on a cryptographic value;

FIG. 6 illustrates an example agent for performing an aspect of piggybacking multiple receivers on a cryptographic value; and

FIG. 7 illustrates an example network device for performing an aspect of piggybacking multiple receivers on a cryptographic value.

## DETAILED DESCRIPTION

Without appropriate security measures, information carried by radio-frequency signals can be accessed by a third party. To address this issue, wireless communications can use cryptography to encrypt the information that is carried by the radio-frequency signals. This encryption can make it challenging for the third party to extract the information. Wireless communication standards, however, may restrict a size (e.g., length or duration) of transmitted messages. This size constraint can make it challenging to pass along the appropriate information such that secure communications can be established between an agent and an owner through multiple receivers.

Some techniques address this issue using fragmentation. Fragmentation involves breaking up information that is to be transmitted into smaller chunks. The smaller chunks enable a wireless communication technology to transmit the information across multiple messages. One challenge with fragmentation is that it adds additional complexity at the receiver. Additionally, it limits movement of the receiver as the receiver needs to remain within communication range of the transmitter to receive the information via the multiple messages.

To address these challenges, techniques are described for piggybacking multiple receivers on a cryptographic value. In example aspects, an agent (e.g., a transmitter) generates a cryptographic value that is based on a shared secret with an owner. The agent uses the cryptographic value to generate a reusable key. To establish secure communications to the owner through multiple receivers, the reusable key acts as a public key for the decryption performed by the second receiver. Additionally, the reusable key acts as a public key for the encryption performed by the first receiver. In this sense, the first receiver and the second receiver are piggybacking on the cryptographic value generated by the transmitter. This piggybacking enables a first message to be transmitted by the agent with a single group element (e.g., the reusable key), which can substantially decrease a size of the first message compared to other techniques that involve transmitting multiple group elements (e.g., a first public key for the encryption performed by the first receiver and a second public key for the decryption performed by the second receiver). With the single group element, the first message can be transmitted using wireless communication technologies with relatively small message sizes, such as Bluetooth™ low energy (Bluetooth™ LE or BLE), without employing fragmentation techniques.

*Operating Environment*

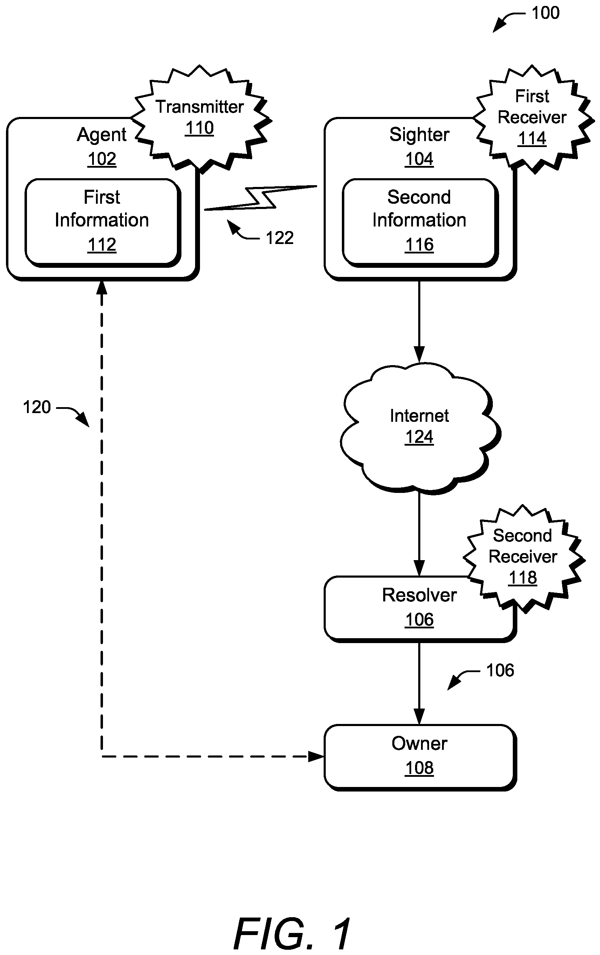

FIG. 1 is an illustration of an example environment 100 in which piggybacking multiple receivers on a cryptographic value can be implemented. The environment 100 includes an agent 102, a sighter 104, a resolver 106, and an owner 108. The agent 102, the sighter 104, the resolver 106, and the owner 108 each comprise at least one device. In the present example, the agent 102 is a device, the sighter 104 is a (further) device, the resolver 106 is a (further) device or comprises a plurality of devices, and the owner 108 is a (further) device. The agent 102 is a device that is associated with the owner 108 through a pairing process. In some situations, the agent 102 enables the owner 108 to track a location of a real-world object, such as a set of keys, a wallet, a vehicle, and so forth. In other situations, the agent 102 collects environmental data for the owner 108.

The agent 102 may be designed for power efficiency to realize longer operational durations between recharges. Designing for power efficiency can also enable the agent 102 to operate with a smaller battery, which can reduce the cost and an overall size of the agent 102. To realize a lower rate of power consumption, some agents 102 utilize a low-power wireless communication technology, such as Bluetooth™ low energy. Other types of low-power wireless communication technologies can alternatively be used, as further described below. With the low-power wireless communication technology, the agent 102 can send a message to the owner 108 through multiple receivers, as further described below.

Designing for power efficiency can lead to the agent 102 having fewer features and/or capabilities. Some agents 102, for instance, may not include a Global Navigation Satellite Systems (GNSS) receiver. As such, these agents 102 may not be able to determine their locations.

The agent 102 can also be referred to as a transmitter 110. The agent 102 stores first information 112, which can be used by another entity (e.g., the resolver 106) to identify the owner 108. In other words, the first information 112 includes identity information of the owner 108. For example, the identity information uniquely identifies the owner 108 (e.g., among a plurality of owner devices). Optionally, the first information 112 can include information that is to be sent (e.g., forwarded) to the owner 108.

In some situations, the agent 102 is unable to directly communicate with the owner 108. The owner 108, for instance, may be too far away from the agent 102 to directly receive a message that is transmitted by the agent 102. For these types of situations, the agent 102 can instead forward information through multiple entities (e.g., multiple receivers), such as the sighter 104 and the resolver 106.

The sighter 104 is a device, such as a smartphone, which is capable of receiving transmissions from the agent 102 when it is in proximity to the agent 102 (e.g., when it is within a communication range of the agent 102). In the context of establishing communications between the agent 102 and the owner 108, the sighter 104 represents (or, e.g., is) a first receiver 114. Other terms can also be used to refer to the sighter 104, including a gateway or an observer. The sighter 104 can store second information 116, which can include a location (e.g., location information) of the sighter 104. In some implementations, the sighter 104 includes a Global Navigation Satellite Systems receiver, which is capable of determining (and updating) a location of the sighter 104.

The resolver 106 can be a device, such as a server, or a collection of devices that form a cloud-based service. In general, the resolver 106 is capable of receiving transmissions from the sighter 104 and communicating with the owner 108. The resolver 106 can perform a resolution service to identify the owner 108 associated with the agent 102. In the context of establishing communications between the agent 102 and the owner 108, the resolver 106 represents (or, e.g., is) a second receiver 118.

The owner 108 is yet another device, such as a smartphone or any other type of computing system, that is paired with the agent 102. Some owners 108 can be paired with multiple agents 102. The owner 108 is capable of communicating with the agent 102 and the resolver 106. In an example implementation, the owner 108 can directly communicate with the agent 102 using Bluetooth™ low energy and can directly communicate with the resolver 106 using an Internet protocol (IP).

The owner 108 may include an application that collects information about a location of the agent 102 and/or collects information that is sent by the agent 102. In some implementations, the owner 108 includes a machine-learned model that uses the information provided by the agent 102 as an input.

During an initialization or setup stage, the agent 102 is associated with or linked to the owner 108 through a pairing process. During operation, the agent 102 broadcasts (e.g., transmits) the first information 112, as represented at 122. The broadcasting may be wireless. The broadcasting may be performed using radio-frequency signals. The sighter 104 receives the first information 112 and forwards the first information 112 to the resolver 106 via the Internet 124. In this example, the Internet 124 represents any combination of wired and/or wireless, local and/or wide area networks that interconnect the sighter 104, the resolver 106, and/or the owner 108. In addition to forwarding the first information 112, the sighter 104 can also transmit the second information 116 to the resolver 106 via the internet 124.

The resolver 106 identifies the owner 108 based on the first information 112 provided by the agent 102. Also, the resolver 106 forwards at least a portion of the first information 112 and/or at least a portion of the second information 116 to the owner 108. The owner 108 receives the information that is forwarded by the resolver 106. In various examples, the owner 108 can use the forwarded information to identify a location of the agent 102 and/or to determine information about the environment surrounding the agent 102. These examples are further described below.

Consider an example item-finding system. In this example, the agent 102 is a beacon capable of transmitting beacon packets (e.g., advertisement packets) using Bluetooth™ low energy to the sighter 104. The sighter 104 can be another device that is at least temporarily within range of the agent 102 and receives at least one of the transmitted beacon packets. Upon receiving a transmitted beacon packet from the agent 102, the sighter 104 forwards the beacon packet (e.g., the first information 112) and the location of the sighter 104 (e.g., the second information 116) to the resolver 106. The resolver 106 identifies the owner 108 based on the beacon packet and forwards the location of the sighter 104 to the owner 108. With this information, the owner 108 can determine at least a general location of the agent 102.

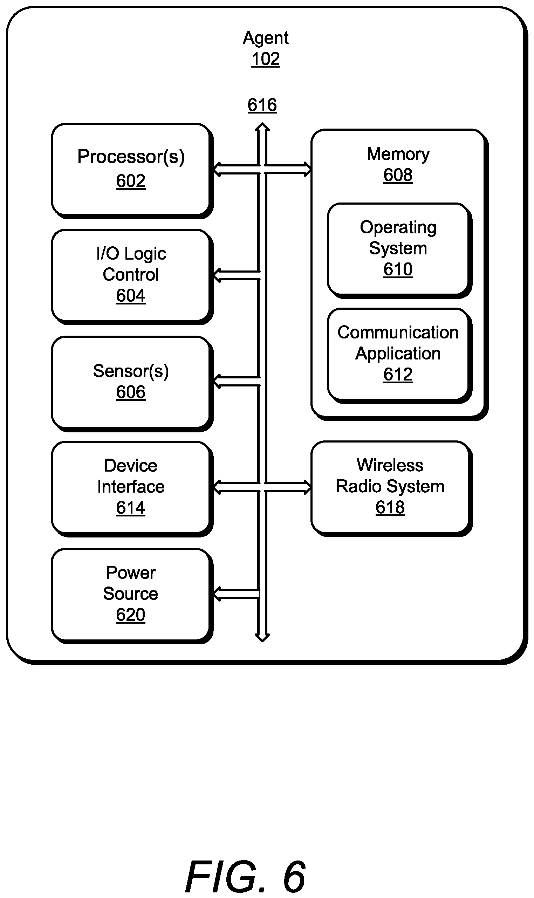

Consider another example in which the agent 102 is capable of sensing (e.g., measuring or collecting) information about its surrounding environment. For instance, the agent 102 can include a temperature sensor and/or a humidity sensor (or another type of sensor described in FIG. 6) for respectively sensing a characteristic of the environment. In this case, the sensor data forms at least a portion of the first information 112 and is intended to be passed to the owner 108. This portion of the first information 112 can be referred to as environmental information. The environmental information may also include other information, such as a time associated with the data. The data is forwarded to the owner 108 through the sighter 104 and the resolver 106.

The owner 108 can use the data to provide additional information to a user. For example, the owner 108 can provide the data as an input to a machine-learned model. With the machine-learned model, the owner 108 can generate a local weather forecast for the location of the agent 102. In some cases, the sighter 104 may send its location to the owner 108 through the resolver 106. In this case, the owner 108 can provide the location of the sighter 104 as an input to the machine-learned model to further improve an accuracy of the local weather forecast.

Although the above discussion frequency refers to Bluetooth™ low energy, Bluetooth™ low energy is an example wireless technology that is mentioned for explanation purposes. The described techniques for piggybacking multiple receivers on a cryptographic value may also be applied to another wireless technology (e.g., ultrawideband (UWB), Wireless Local Area Network (WLAN), near field communication (NFC), a personal area network (PAN), IEEE 802.15.4, ZigBee, Thread, or the like) in a similar manner.

To prevent a malicious actor from obtaining the first information 112 and/or the second information 116, the agent 102, the sighter 104, and the resolver 106 can employ cryptography. This enables a communication from the agent 102 to the owner 108 to be anonymized (by hiding the identities of both the agent 102 and owner 108). The routing system (e.g., the resolver 106) can resolve the anonymity into an identification of the owner 108 to connect the agent 102 to the owner 108. The sighter 104 can be any intermediary device that receives a transmission from the agent 102 and forwards (or sends) information to the owner 108 in spite of the anonymity. The transmissions of the sighter 104 are kept secure from the resolver 106 (and any other network nodes) except the owner 108.

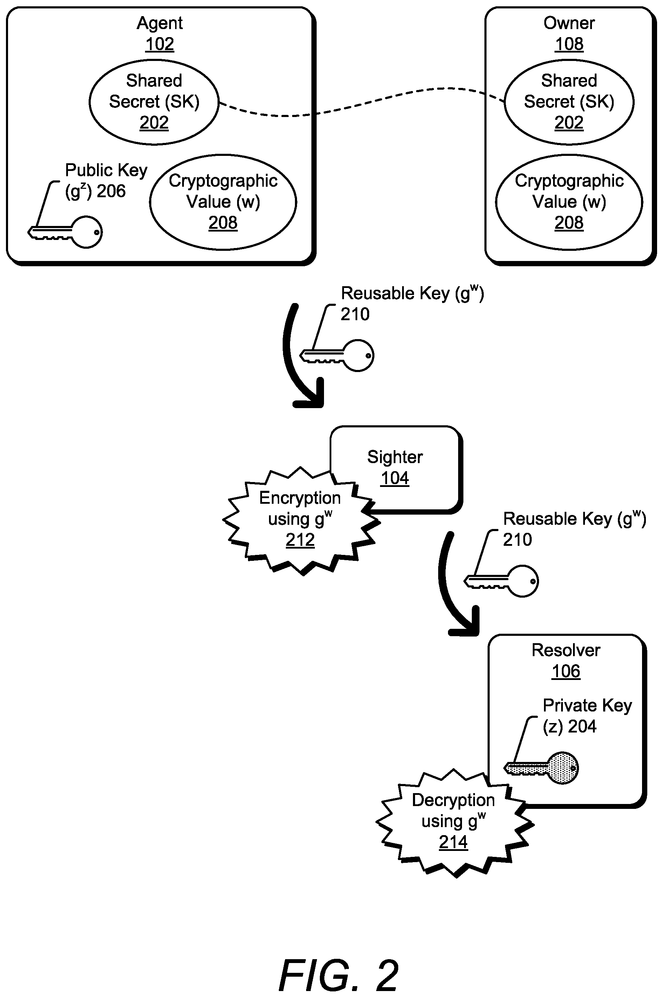

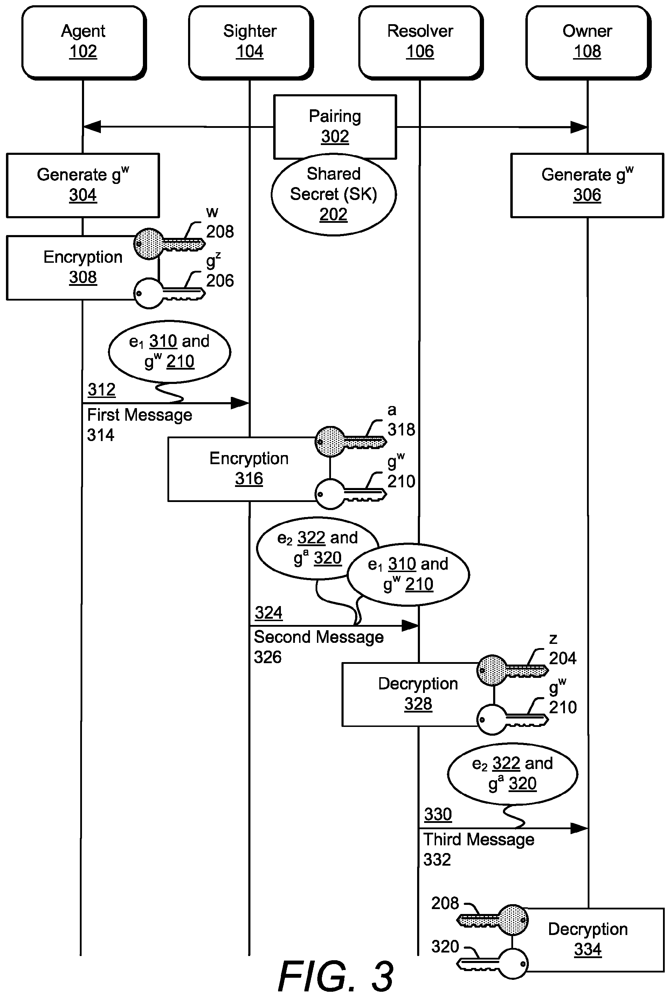

To reduce a size of the transmissions at the agent 102 while enabling secure communications to be established, techniques for piggybacking multiple receivers on a cryptographic value are further described with respect to FIG. 3. These techniques include reusing a local public key that is generated at the agent and is based on a secret key that is shared between the agent 102 and the owner 108, as further described with respect to FIG. 2.

*Piggybacking Multiple Receivers on a Cryptographic Value*

FIG. 2 illustrates example cryptographic keys for piggybacking multiple receivers on a cryptographic value. During the initialization phase, the agent 102 and the owner 108 establish a shared secret (SK) 202. The resolver 106 uses cryptography to generate a private key (z) 204 and to generate a public key ($g^z$) 206 based on the private key 204. The agent 102 receives the public key 206 indirectly or directly from the resolver 106.

To perform aspects of piggybacking multiple receivers on a cryptographic value, the agent 102 and the owner 108 each generate cryptographic value (w) 208 based on the shared secret 202. The cryptographic value 208 represents an ephemeral identifier in that it can change over time (e.g., every few minutes, multiple times a day, and so forth).

The agent 102 and the owner 108 also generate a key, in the present example a reusable key ($g^w$) 210, based on the cryptographic value 208. In particular, the agent 102 and the owner 108 use asymmetric cryptography techniques to generate the reusable key 210 based on the cryptographic value 208. In this sense, the cryptographic value 208 represents a private key and the reusable key 210 represents a public key that is derived from the private key.

The agent 102 broadcasts the reusable key 210 to the sighter 104. With the reusable key 210, the sighter 104 can also pass private information to the owner 108. In particular, the sighter 104 can perform encryption using the reusable key 210, as indicated at 212. In this case, the sighter 104 uses the reusable key 210 as a private key for performing the encryption.

The sighter 104 forwards the reusable key 210 to the resolver 106. With the reusable key 210, the resolver 106 can resolve the identity of the owner 108. To identify the owner 108, the resolver 106 performs decryption (re-)using the reusable key 210, as indicated at 214. More specifically, the resolver 106 uses the reusable key 210 as a public key to decrypt information that is sent by the agent 102 via the sighter 104.

As the reusable key 210 is derived from the cryptographic value 208, the first receiver 114 and the second receiver 118 are piggybacking on the cryptographic value 208 generated by the agent 102 to perform the encryption and the decryption, respectively. This piggybacking enables a first message to be transmitted by the agent 102 with a single group element (e.g., the reusable key 210), which can substantially decrease a size of the first message compared to other techniques that involve transmitting multiple group elements (e.g., a first public key for the encryption performed by the first receiver and a second public key for the decryption performed by the second receiver). In some examples, a size of the message having a single group element can be at least 40% smaller than other messages having two group elements. With the single group element, the first message can be transmitted using wireless communication technologies with relatively small message sizes, such as Bluetooth™ low energy, without employing fragmentation techniques. Example transactions between the agent 102, the sighter 104, the resolver 106, and the owner 108, are further described with respect to FIG. 3.

FIG. 3 illustrates example transactions for piggybacking multiple receivers on a cryptographic value. At 302, the agent 102 and the owner 108 perform a pairing procedure. During the pairing procedure, the agent 102 and the owner 108 initiate a common state and agree upon the shared secret 202. Establishing, by the agent 102, the shared secret with the owner 108 (of the agent) may be performed by performing, by the agent 102, the pairing procedure with the owner 108. The pairing procedure can be performed in a secure physical environment based on proximity and a lack of other near-by devices to ensure the shared secret 202 is known only to the agent 102 and the owner 108. Generally speaking, the pairing procedure enables messages broadcasted by the agent 102 to be associated with the owner 108.

At 304 and 306, the agent 102 and the owner 108 generate the reusable key 210 based on the shared secret 202. From the common state, the agent 102 and the owner 108 can decide on a common rotating key based on a pseudorandom function (PRF). The pseudorandom function can ensure a message transmitted by the agent 102 is inaccessible to any entity but the owner 108 and the resolver 106. More specifically, the agent 102 and the owner 108 apply a pseudorandom function (PRF) to generate the cryptographic value 208 based on a time element and the shared secret 202, as shown in Equation 1 below.

$$w = PRF_{SK}(time) \qquad \text{Equation 1}$$

The time element can represent the current time, a function of the current time, or a value of a counter. By using a pre-agreed pseudorandom function, the agent 102 can enable the sighter 104 with an algorithmic method to secure a channel to the owner 108 without the sighter 104 knowing who the owner 108 is or without the sighter 104 having access to the owner 108.

To generate the reusable key 210, the agent 102 and the owner 108 can use a cryptographic algorithm, such as a Diffie-Hellman (DH)-based algorithm (e.g., an elliptic curve DH-based algorithm). For example, the reusable key 210 can be generated as part of a computation for a Diffie-Hellman Integrated Encryption Scheme (DHIES), which his further described below.

At 308, the agent 102 encrypts the first information 112 using the cryptographic value 208 and the public key 206. For example, the agent 102 uses the Diffie-Hellman Integrated Encryption Scheme to encrypt the first information 112. More specifically, the agent 102 applies a key derivation function (KDF) to generate a first key ($K_1$), as shown in Equation 2 below.

$$K_1 = KDF(g^{wz}) \qquad \text{Equation 2}$$

Using the first key, the agent 102 encrypts the first information 112 to generate encrypted first information ($e_1$) 310, as shown in Equation 3 below.

$$e_1 = ENC_{K_1}(m_1) \qquad \text{Equation 3}$$

The variable $m_1$ represents the first information 112, and *ENC* represents a symmetric encryption function. In this example, the reusable key 210 represents an ephemeral private key used in the Diffie-Hellman Integrated Encryption Scheme and the public key 206 represents a public key used in the Diffie-Hellman Integrated Encryption Scheme.

At 312, the agent 102 broadcasts (e.g., transmits) a first message 314. The first message 314 includes the encrypted first information 310 and the reusable key 210. In this sense, the first message 314 includes a symmetric encryption (e.g., the encrypted first information 310) and one group element (e.g., the reusable key 210).

The first message 314 does not include another public key. As such, the first message 314 can have a smaller size than other messages that include the symmetric encryption with two group elements (e.g., a public key for enabling encryption via the sighter 104 and a public key for decrypting the encrypted first information 310). Furthermore, the first message 314 can be transmitted, without fragmentation, using wireless technology that supports smaller-sized messages, such as Bluetooth™ low energy. In other words, a single exchange can occur to pass the first message 314 from the agent 102 to the sighter 104. In an example, a content of the first message 314 can have a size of approximately 256 bytes or less. The broadcasted first message 314 can be received by one or more sighters 104 that are located near the agent 102. In this example, the sighter 104 receives the first message 314.

At 316, the sighter 104 performs encryption using a second cryptographic value (a) 318 and the reusable key 210. More specifically, the sighter 104 uses a random number generator to generate the second cryptographic value 318. The second cryptographic value 318 can represent an ephemeral identifier. The sighter 104 uses a cryptographic algorithm, such as a Diffie-Hellman (DH)-based algorithm to generate a public key ($g^a$) 320 based on the second cryptographic value 318.

At 316, the agent 102 encrypts the second information 116 using the second cryptographic value 318 and the reusable key 210. For example, the agent 102 uses a Diffie-Hellman Integrated Encryption Scheme to encrypt the second information 116. In this case, the second cryptographic value 318 represents an ephemeral private key and the reusable key 210 represents a pseudorandom public key. In more detail, the agent 102 applies a key derivation function to generate a second key ($K_2$), as shown in Equation 4 below.

$$K_2 = KDF(g^{aw}) \qquad \text{Equation 4}$$

Using the second key, the agent 102 encrypts the second information 116 to generate encrypted second information ($e_2$) 322, as shown in Equation 5 below.

$$e_2 = ENC_{K_2}(m_2) \qquad\qquad \text{Equation 5}$$

The variable $m_2$ represents the second information 116 and *ENC* represents a symmetric encryption function. In this example, the second cryptographic value 318 represents an ephemeral private key used in the Diffie-Hellman Integrated Encryption Scheme and the reusable key 210 represents a public key used in the Diffie-Hellman Integrated Encryption Scheme.

At 324, the sighter 104 transmits a second message 326 to the resolver 106. The second message 326 includes the encrypted first information 310, the reusable key 210, the encrypted second information 322, and the public key 320.

At 328, the resolver 106 decrypts the encrypted first information 310 using the private key 204 and the reusable key 210. More specifically, the resolver 106 applies a key derivation function to reconstruct the first key $K_1$. The resolver 106 is able to reconstruct the first key $K_1$ because it has the private key 204 and because the reusable key 210 was forwarded to it via the sighter 104. Using the first key $K_1$, the resolver 106 decrypts the encrypted first information 310 to resolve the identity of the owner 108, as shown in Equation 6 below.

$$m_1 = DEC_{K_1}(e_1) \qquad\qquad \text{Equation 6}$$

The decryption performed at 328 enables the resolver 106 to recover the first message 314 broadcasted by the agent 102. With the first information 310, the resolver 106 can associate the agent 102's broadcast with the owner 108 without using a large table (or multiple tables), which map every possible key sent by an agent (e.g., over the course of a day) to the agent's owner.

At 330, the resolver 106 transmits a third message 332 to the owner 108. The third message 332 includes the encrypted second information 322 and the public key 320. In this example, the resolver 106 cannot access the content of the second encrypted message 322, which is intended for the owner 108.

At 334, the owner 108 decrypts the encrypted second information 322 using the cryptographic value 208 and the public key 320. More specifically, the owner 108 applies a key derivation function to reconstruct the second key $K_2$. The owner 108 is able to reconstruct the second key $K_2$ because it has the cryptographic value 208 and because the public key 320 was forwarded to it via the resolver 106. Using the second key $K_2$, the resolver 106 decrypts the encrypted second information 322, as shown in Equation 7 below.

$$m_2 = DEC_{K_2}(e_2) \qquad\qquad \text{Equation 7}$$

The owner 108 can provide the decrypted second information 116 to an application running on the owner 108. In various examples, the application can display the second information 116 or use the second information 116 to generate other information, such as the weather forecast described above with respect to FIG. 1.

The techniques for piggybacking multiple receivers on a cryptographic value are applicable with many other standardized and non-standardized cryptographic algorithms. Although the above discussion frequency refers to Diffie-Hellman-based algorithms or operations, the Diffie-Hellman-based algorithms are an example type of cryptography that is mentioned for explanation purposes. The described techniques for piggybacking multiple receivers on a cryptographic value may also be applied to other types of cryptography.

Other security techniques, such as backward security, can also be incorporated. Backward security modifies the protocol illustrated in FIG. 3 so as to provide the sighter 104 with a public key whose respective private key is hidden from the agent 102. This ensures that if the agent 102 is compromised, the encryption at the sighter 104 remains secure. To provide backward security, the owner 108 generates a private key and provides the agent 102 with a corresponding public key. The agent 102 generates the reusable key 210 based on this public key and the cryptographic value 208.

*Example Methods*

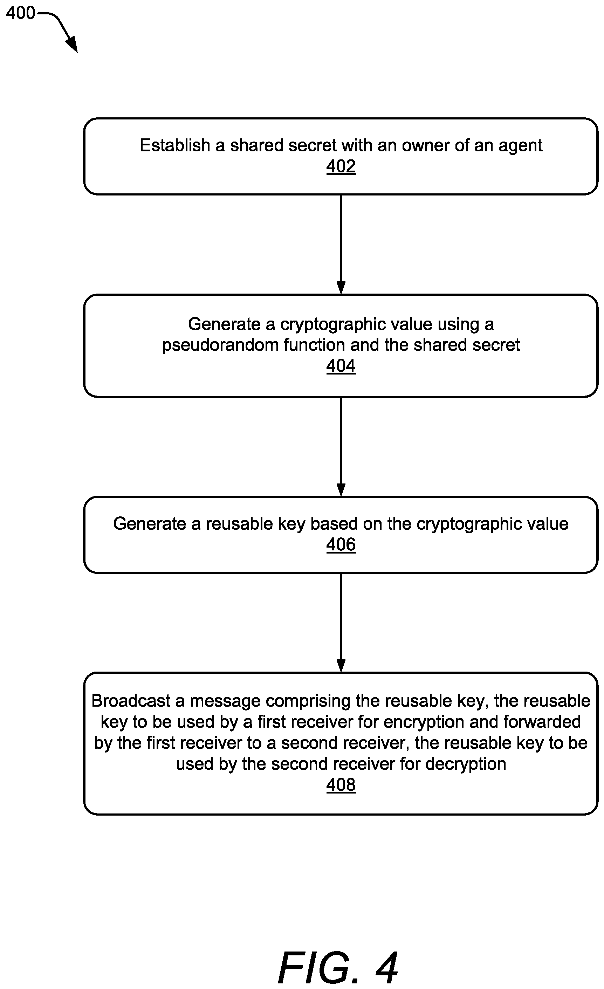

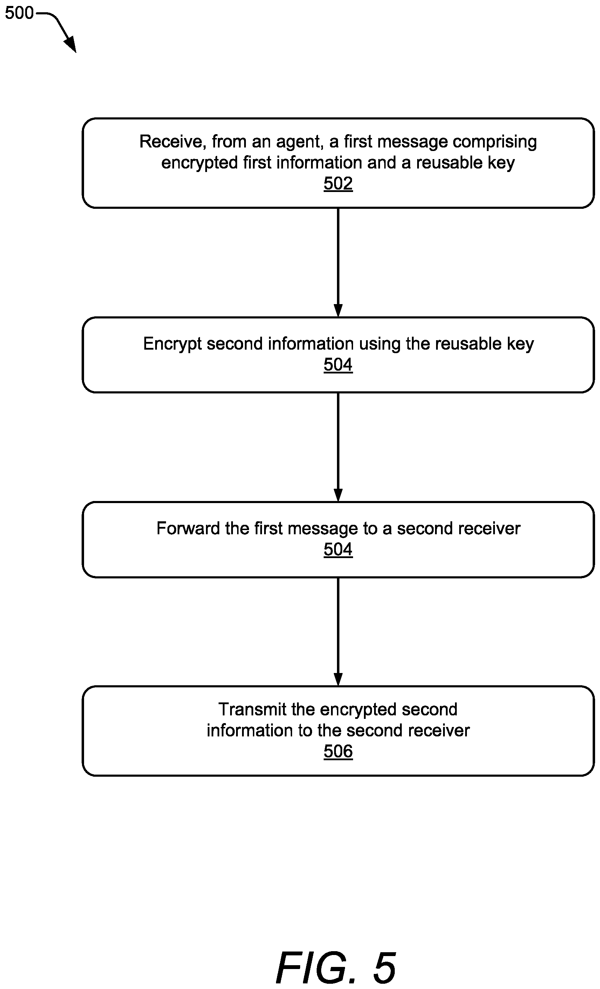

FIGs. 4 and 5 depict example methods 400 and 500 for piggybacking multiple receivers on a cryptographic value. Methods 400 and 500 are shown as sets of operations (or acts) performed but not necessarily limited to the order or combinations in which the operations are shown herein. Further, any of one or more of the operations may be repeated, combined, reorganized, or linked to provide a wide array of additional and/or alternate methods. In portions of the following discussion, reference may be made to the environment 100 of FIG. 1, and entities detailed in FIG. 2 and 3, reference to which is made for example only. The techniques are not limited to performance by one entity or multiple entities operating on one device.

At 402 in FIG. 4, a shared secret is established with an owner (e.g., an owner device), which may be an owner of an agent and/or associated with an agent (e.g., an agent device). For example, the agent 102 and the owner 108 perform a pairing procedure to establish the shared secret 202, as indicated at 302 in FIG. 3.

At 404, a cryptographic value is generated using a pseudorandom function and the shared secret. For example, the agent 102 generates the cryptographic value 208 using a pseudorandom function and the shared secret 202, as shown in Equation 1.

At 406, a reusable key is generated based on the cryptographic value. For example, the agent 102 generates the reusable key 210 based on the cryptographic value 208, as indicated at 304 in FIG. 3.

At 408, a message comprising the reusable key is broadcasted. The reusable key is to be used (and is configured to be used) by a first receiver for encryption and forwarded by the first receiver to a second receiver. Also, the reusable key is to be used (and is configured to be used) by the second receiver for decryption. For example, the agent 102 broadcasts the first message 314, which includes the reusable key 210, as shown at 312 in FIG. 3. The reusable key 210 is to be used by the sighter 104 (e.g., the first receiver 114) for encryption, as indicated at 316 in FIG. 3. More specifically, the sighter 104 encrypts the second information 116 using the reusable key 210, as shown in Equations 4 and 5. Additionally, the sighter 104 is to forward the reusable key 210 to the resolver 106 (e.g., the second receiver 118).

The reusable key 210 is also to be used by the resolver 106 for decryption, as indicated at 328 in FIG. 3. More specifically, the resolver 106 reconstructs the first key $K_1$ based on the reusable key 210 and the private key 204. With the reconstructed first key $K_1$, the resolver 106 decrypts the encrypted first information 310, as shown in Equation 6.

At 502 in FIG. 5, a first message comprising encrypted first information and a reusable key is received from an agent. For example, the sighter 104 receives, from the agent 102, the first message 314, which includes the encrypted first information 310 and the reusable key 210. The encrypted first information was encrypted using a cryptographic value 208 derived from a shared secret 202 between the agent 102 and an owner 108. The reusable key 210 was derived from the cryptographic value 208.

At 504, second information is encrypted using the reusable key. For example, the sighter 104 encrypts the second information 116 using the reusable key 210, as indicated at 316 in FIG. 3. More specifically, the sighter 104 applies a cryptographic technique (e.g., DHIES) to encrypt the second information 116 based on the reusable key 210 acting as an ephemeral private key. The encryption of the second information 116 is described with respect to Equations 4 and 5.

At 506, the first message is forwarded to a second receiver. For example, the sighter 104 forwards the first message 314 (e.g., the contents of the first message 314) to the resolver 106, as indicated at 324 in FIG. 3.

At 508, the encrypted second information is transmitted to the second receiver. For example, the sighter 104 transmits the encrypted second information 322 to the resolver 106, as indicated at 324 in FIG. 3. In some cases, the forwarding of the first message 314 and the transmitting of the encrypted second information 322 can occur together (e.g., as part of a single exchange).

With these example methods, an agent 102 can transmit a first message 314 with a single group element (e.g., the reusable key 210), which can substantially decrease a size of the first message 314 compared to other techniques that involve transmitting multiple group elements (e.g., a first public key for the encryption performed by the first receiver and a second public key for the decryption performed by the second receiver). With the single group element, the first message 314 can be transmitted using wireless communication technologies with relatively small message sizes, such as those associated with low-power wireless communication, without employing fragmentation techniques. Example low-power wireless communication technologies include Bluetooth™ low energy, ultrawideband, Wireless Local Area Network, near field communication, a personal area network (PAN), IEEE 802.15.4, ZigBee, or Thread.

Notably, the methods of FIGs. 4 and 5 may be combined with one another. In a (combined) method, e.g., the agent 102 performs the steps illustrated in FIG. 4 and the sighter 104 performs the steps illustrated in FIG. 5.

*Example Devices*

FIG. 6 illustrates an example agent 102 capable of performing, at least in part, an aspect of piggybacking multiple receivers on a cryptographic value. The agent 102 can be integrated with electronic circuitry, microprocessors, memory, input output (I/O) logic control, communication interfaces and components, as well as other hardware, firmware, and/or software to implement the device in a network.

In this example, the agent 102 includes one or more processors 602 (e.g., microcontrollers or digital signal processors) that process executable instructions. The agent 102 also includes an input-output (I/O) logic control 604 (e.g., to include electronic circuitry). The processor(s) 602 can include components of an integrated circuit, programmable logic device, a logic device formed using one or more semiconductors, and other implementations in silicon and/or hardware, such as a processor and memory system implemented as a system-on-chip (SoC). Alternatively or in addition, the agent 102 can be implemented with any one or combination of software, hardware, firmware, or fixed logic circuitry that may be implemented with processing and control circuits.

Optionally or additionally, one or more sensors 606 may be included and implemented to detect various properties such as acceleration, temperature, humidity, water, supplied power, proximity, external motion, device motion, sound signals, ultrasound signals, light signals, fire, smoke, carbon monoxide, global-positioning-satellite (GPS) signals, radio-frequency (RF), other electromagnetic signals or fields, or the like. As such, the sensors 606 may include any one or a combination of temperature sensors, humidity sensors, hazard-related sensors, other environmental sensors, accelerometers, microphones, optical sensors up to and including cameras (e.g., charged coupled-device or video cameras), active or passive radiation sensors, GPS receivers, and radio frequency identification detectors. In implementations, the agent 102 may include one or more primary sensors, as well as one or more secondary sensors, such as primary sensors that sense data central to the core operation of the device (e.g., sensing a temperature in a thermostat or sensing smoke in a smoke detector), while the secondary sensors may sense other types of data (e.g., motion, light or sound), which can be used for energy-efficiency objectives or smart-operation objectives.

The agent 102 includes a memory 608, such as any type of a non-volatile memory and/or other suitable electronic data storage device. The agent 102 can also include various firmware and/or software, such as an operating system 610 that is maintained as computer executable instructions by the memory and executed by a processor. The device software may also include a communication application 612 that facilitates communication with the sighter 104 and the owner 108. Optionally or additionally, the agent 102 also includes a device interface 614 to interface with the owner 108, another device, and/or a peripheral component. The agent 102 includes an integrated data bus 616 that couples the various components for data communication. The data bus may also be implemented as any one or a combination of different bus structures and/or bus architectures.

The device interface 614 may receive input from a user and/or provide information to the user (e.g., as a user interface), and a received input can be used to determine a setting. The device interface 614 may also include mechanical or virtual components that respond to a user input. For example, the user can mechanically move a sliding or rotatable component, or the motion along a touchpad may be detected, and such motions may correspond to a setting adjustment of the device. Physical and virtual movable user-interface components can allow the user to set a setting along a portion of an apparent continuum. The device interface 614 may also receive inputs from any number of peripherals, such as buttons, a keypad, a switch, a microphone, and an imager (e.g., a camera device).

The agent 102 can include a wireless radio system 618 for wireless communication. The wireless radio system 618 may include Wi-Fi™, Bluetooth™, Bluetooth™ low energy, Mobile Broadband, and/or point-to-point IEEE 602.15.4. The wireless radio system 618 can include a radio device, antenna, and chipset that is implemented for a particular wireless communications technology. The agent 102 also includes a power source 620, such as a battery and/or to connect the device to line voltage. An AC power source may also be used to charge the battery of the device.

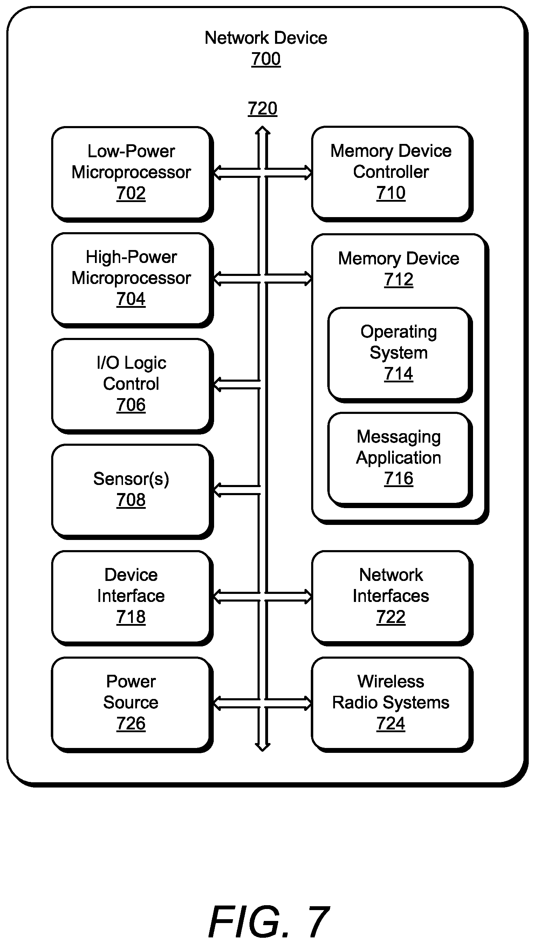

FIG. 7 illustrates an example network device 700 that can be implemented as any of the sighter 104, the resolver 106, or the owner 108. The network device 700 can be integrated with electronic circuitry, microprocessors, memory, input output (I/O) logic control, communication interfaces and components, as well as other hardware, firmware, and/or software to implement the device in a network.

In this example, the network device 700 includes a low-power microprocessor 702 and/or a high-power microprocessor 704 (e.g., microcontrollers or digital signal processors) that process executable instructions. The device also includes an input-output (I/O) logic control 706 (e.g., to include electronic circuitry). The microprocessors can include components of an integrated circuit, programmable logic device, a logic device formed using one or more semiconductors, and other implementations in silicon and/or hardware, such as a processor and memory system implemented as a system-on-chip (SoC). Alternatively or in addition, the device can be implemented with any one or combination of software, hardware, firmware, or fixed logic circuitry that may be implemented with processing and control circuits. The low-power microprocessor 702 and the high-power microprocessor 704 can also support one or more different device functionalities of the device. For example, the high-power microprocessor 704 may execute computationally intensive operations, whereas the low-power microprocessor 702 may manage less-complex processes such as detecting a hazard or temperature from one or more sensors 708. The low power processor 702 may also wake or initialize the high-power processor 704 for computationally intensive processes.

The one or more sensors 708 may be included and implemented to detect various properties such as acceleration, temperature, humidity, water, supplied power, proximity, external motion, device motion, sound signals, ultrasound signals, light signals, fire, smoke, carbon monoxide, global-positioning-satellite (GPS) signals, radio-frequency (RF), other electromagnetic signals or fields, or the like. As such, the sensors 708 may include any one or a combination of temperature sensors, humidity sensors, hazard-related sensors, other environmental sensors, accelerometers, microphones, optical sensors up to and including cameras (e.g., charged coupled-device or video cameras), active or passive radiation sensors, GPS receivers, and radio frequency identification detectors. In implementations, the network device 700 may include one or more primary sensors, as well as one or more secondary sensors, such as primary sensors that sense data central to the core operation of the device (e.g., sensing a temperature in a thermostat or sensing smoke in a smoke detector), while the secondary sensors may sense other types of data (e.g., motion, light or sound), which can be used for energy-efficiency objectives or smart-operation objectives.

The network device 700 includes a memory device controller 710 and a memory device 712, such as any type of a non-volatile memory and/or other suitable electronic data storage device. The network device 700 can also include various firmware and/or software, such as an operating system 714 that is maintained as computer executable instructions by the memory and executed by a microprocessor. The device software may also include a messaging application 716, which may implement an aspect of piggybacking multiple receivers using a cryptographic value. The network device 700 also includes a device interface 718 to interface with another device or peripheral component and includes an integrated data bus 720 that couples the various components of the wireless network device for data communication between the components. The data bus in the wireless network device may also be implemented as any one or a combination of different bus structures and/or bus architectures.

The device interface 718 may receive input from a user and/or provide information to the user (e.g., as a user interface), and a received input can be used to determine a setting. The device interface 718 may also include mechanical or virtual components that respond to a user input. For example, the user can mechanically move a sliding or rotatable component, or the motion along a touchpad may be detected, and such motions may correspond to a setting adjustment of the device. Physical and virtual movable user-interface components can allow the user to set a setting along a portion of an apparent continuum. The device interface 718 may also receive inputs from any number of peripherals, such as buttons, a keypad, a switch, a microphone, and an imager (e.g., a camera device).

The network device 700 can include network interfaces 722, such as a wireless network interface for communication with other wireless network devices in a wireless network, and an external network interface for network communication, such as via the Internet 124. The network device 700 also includes wireless radio systems 724 for wireless communication with other wireless network devices via the wireless network interface and for multiple, different wireless communications systems. The wireless radio systems 724 may include Wi-Fi™, Bluetooth™, Bluetooth™ low energy, Mobile Broadband, and/or point-to-point IEEE 802.15.4. Each of the different radio systems can include a radio device, antenna, and chipset that is implemented for a particular wireless communications technology. The network device 700 also includes a power source 726, such as a battery and/or to connect the device to line voltage. An AC power source may also be used to charge the battery of the device.

*Conclusion*

Although techniques using, and apparatuses including, piggybacking multiple receivers on a cryptographic value have been described in language specific to features and/or methods, it is to be understood that the subject of the appended claims is not necessarily limited to the specific features or methods described. Rather, the specific features and methods are disclosed as example implementations of piggybacking multiple receivers on a cryptographic value.

Some examples are described below.

Example 1. A method performed by an agent, the method comprising:

establishing a shared secret with an owner of the agent;
generating a cryptographic value using a pseudorandom function and the shared secret;
generating a reusable key based on the cryptographic value; and
broadcasting a message comprising the reusable key, the reusable key to be used by a first receiver for encryption and forwarded by the first receiver to a second receiver, the reusable key to be used by the second receiver for decryption.

Example 2. The method of example 1, wherein:

the message comprises a single group element;
the single group element comprises the reusable key; and
the message does not include another cryptographic key.

Example 3. The method of example 1 or 2, further comprising:

generating a first key using the cryptographic value and using a public key associated with the second receiver; and
encrypting first information using the first key,
wherein the message comprises the encrypted first information and the reusable key, the message to be forwarded by the first receiver to the second receiver.

Example 4. The method of example 3, wherein:

the encrypting of the first information comprises encrypting the first information using a Diffie-Hellman Integrated Encryption Scheme;
the reusable key represents an ephemeral private key used in the Diffie-Hellman Integrated Encryption Scheme; and
the public key associated with the second receiver represents a public key used in the Diffie-Hellman Integrated Encryption Scheme.

Example 5. The method of example 3 or 4, wherein:

the agent comprises a beacon;
the first receiver comprises a sighter; and
the second receiver comprises a resolver.

Example 6. The method of example 5, wherein:

the first information comprises identity information of the owner;
the reusable key is to be used by the sighter for encrypting location information of the sighter; and
the reusable key is to be used by the resolver for decrypting the encrypted first information.

Example 7. The method of any previous example, further comprising:

generating environmental information using at least one sensor of the agent,
wherein the first information comprises the environmental information.

Example 8. The method of any previous example, wherein a size of the message enables the message to be broadcasted in a single exchange.
Example 9. The method of example 8, wherein:

the broadcasting of the message comprises broadcasting the message using Bluetooth™ low energy; and
the size of the message enables the message to be broadcasted in the single exchange via the Bluetooth™ low energy.

Example 10. The method of any previous example, wherein the message does not include another cryptographic key.
Example 11. A method performed by a first receiver, the method comprising:

receiving, from an agent, a first message comprising encrypted first information and a reusable key, the encrypted first information being encrypted using a first cryptographic value derived from a shared secret between the agent and an owner of the agent, the reusable key being derived from the first cryptographic value;
encrypting second information using the reusable key;
forwarding the first message to a second receiver; and
transmitting the encrypted second information to the second receiver.

Example 12. The method of example 11, wherein:

the first message comprises a single group element; and
the single group element comprises the reusable key.

Example 13. The method of example 12, wherein the message does not include another cryptographic key.
Example 14. The method of any one of examples 11 to 13, further comprising:

generating a second cryptographic value;
generating a first public key using the second cryptographic value; and
generating a key using the reusable key and using the second cryptographic value,
wherein:

the encrypting of the second information comprises encrypting the second information using the key; and
the forwarding of the first message and the transmitting of the encrypted second information comprises transmitting a second message to the second receiver, the second message comprising encrypted first information, the reusable key, the encrypted second information, and the first public key.

Example 15. The method of example 14, wherein:

the encrypting of the second information comprises encrypting the second information using a Diffie-Hellman Integrated Encryption Scheme;
the second cryptographic value represents an ephemeral private key used in the Diffie-Hellman Integrated Encryption Scheme; and

the reusable key represents a pseudorandom public key used in the Diffie-Hellman Integrated Encryption Scheme.

Example 16. The method of example 14 or 15, wherein the generating of the second cryptographic value comprises generating a random number.

Example 17. The method of any one of examples 11 to 16, wherein the encrypted first information is encrypted using a second public key of the second receiver and using the first cryptographic value associated with the reusable key.

Example 18. The method of any one of examples 11 to 17, wherein:

the receiving of the message comprises receiving the message using Bluetooth™ low energy; and

a size of the message enables the message to be received in a single exchange via the Bluetooth™ low energy.

Example 19. A device comprising:

a transceiver; and

a processor coupled to the transceiver, the device configured to perform, using the transceiver and the processor, any one of the methods of examples 1 to 18.

Example 20. A computer-readable storage medium comprising instructions that, responsive to execution by a processor, cause a device to perform any one of the methods of examples 1 to 18.

**Claims**

1. A method performed by an agent, the method comprising:

   establishing a shared secret with an owner of the agent;
   generating a cryptographic value using a pseudorandom function and the shared secret;
   generating a reusable key based on the cryptographic value; and
   broadcasting a message comprising the reusable key, the reusable key to be used by a first receiver for encryption and forwarded by the first receiver to a second receiver, the reusable key to be used by the second receiver for decryption.

2. The method of claim 1, wherein:

   the message comprises a single group element; and
   the single group element comprises the reusable key,
   wherein the message does not include another cryptographic key.

3. The method of claim 1 or 2, further comprising:

   generating a first key using the cryptographic value and using a public key associated with the second receiver; and
   encrypting first information using the first key,
   wherein the message comprises the encrypted first information and the reusable key, the message to be forwarded by the first receiver to the second receiver, and
   wherein:

      the encrypting of the first information comprises encrypting the first information using a Diffie-Hellman Integrated Encryption Scheme;
      the reusable key represents an ephemeral private key used in the Diffie-Hellman Integrated Encryption Scheme; and
      the public key associated with the second receiver represents a public key used in the Diffie-Hellman Integrated Encryption Scheme.

4. The method of claim 3, wherein:

   the agent comprises a beacon;

the first receiver comprises a sighter; and
the second receiver comprises a resolver.

5. The method of claim 4, wherein:

the first information comprises identity information of the owner;
the reusable key is to be used by the sighter for encrypting location information of the sighter; and
the reusable key is to be used by the resolver for decrypting the encrypted first information.

6. The method of any previous claim, further comprising:

generating environmental information using at least one sensor of the agent,
wherein the first information comprises the environmental information.

7. The method of any previous claim, wherein a size of the message enables the message to be broadcasted in a single exchange; and, optionally,
wherein:

the broadcasting of the message comprises broadcasting the message using Bluetooth™ low energy; and
the size of the message enables the message to be broadcasted in the single exchange via the Bluetooth™ low energy.

8. A method performed by a first receiver, the method comprising:

receiving, from an agent, a first message comprising encrypted first information and a reusable key, the encrypted first information being encrypted using a first cryptographic value derived from a shared secret between the agent and an owner of the agent, the reusable key being derived from the first cryptographic value;
encrypting second information using the reusable key;
forwarding the first message to a second receiver; and
transmitting the encrypted second information to the second receiver.

9. The method of claim 8, wherein:

the first message comprises a single group element; and
the single group element comprises the reusable key;
wherein the first message does not include another cryptographic key.

10. The method of any one of claims 8 or 9, further comprising:

generating a second cryptographic value;
generating a first public key using the second cryptographic value; and
generating a key using the reusable key and using the second cryptographic value,
wherein:

the encrypting of the second information comprises encrypting the second information using the key; and
the forwarding of the first message and the transmitting of the encrypted second information comprises transmitting a second message to the second receiver, the second message comprising the encrypted first information, the reusable key, the encrypted second information, and the first public key.

11. The method of claim 10, wherein the generating of the second cryptographic value comprises generating a random number and/or wherein:

the encrypting of the second information comprises encrypting the second information using a Diffie-Hellman Integrated Encryption Scheme;
the second cryptographic value represents an ephemeral private key used in the Diffie-Hellman Integrated Encryption Scheme; and
the reusable key represents a pseudorandom public key used in the Diffie-Hellman Integrated Encryption Scheme.

**12.** The method of any one of claims 8 to 11, wherein the encrypted first information is encrypted using a second public key of the second receiver and using the first cryptographic value associated with the reusable key.

**13.** The method of any one of claims 8 to 12, wherein:

the receiving of the message comprises receiving the message using Bluetooth™ low energy; and
a size of the message enables the message to be received in a single exchange via the Bluetooth™ low energy.

**14.** A device comprising:

a transceiver; and
a processor coupled to the transceiver, the device configured to perform, using the transceiver and the processor, any one of the methods of claims 1 to 13.

**15.** A computer-readable storage medium comprising instructions that, responsive to execution by a processor, cause a device to perform any one of the methods of claims 1 to 13.

FIG. 1

*FIG. 2*

*FIG. 3*

400

Establish a shared secret with an owner of an agent
402

Generate a cryptographic value using a
pseudorandom function and the shared secret
404

Generate a reusable key based on the cryptographic value
406

Broadcast a message comprising the reusable key, the reusable
key to be used by a first receiver for encryption and forwarded
by the first receiver to a second receiver, the reusable key to be
used by the second receiver for decryption
408

*FIG. 4*

500

Receive, from an agent, a first message comprising
encrypted first information and a reusable key
502

Encrypt second information using the reusable key
504

Forward the first message to a second receiver
504

Transmit the encrypted second
information to the second receiver
506

*FIG. 5*

Agent
102

616

Processor(s)
602

I/O Logic
Control
604

Sensor(s)
606

Device
Interface
614

Power
Source
620

Memory
608

Operating
System
610

Communication
Application
612

Wireless
Radio System
618

FIG. 6

Network Device
700

720

Low-Power
Microprocessor
702

Memory Device
Controller
710

High-Power
Microprocessor
704

Memory Device
712

Operating
System
714

Messaging
Application
716

I/O Logic
Control
706

Sensor(s)
708

Device
Interface
718

Network
Interfaces
722

Power
Source
726

Wireless
Radio Systems
724

*FIG. 7*

Europäisches Patentamt

European Patent Office

Office européen des brevets

# EUROPEAN SEARCH REPORT

**Application Number**

EP 25 18 7015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/211314 A1 (GOOGLE LLC [US]) 21 October 2021 (2021-10-21) * paragraphs [0012], [0016] - [0030], [0064]; figures 1,2,.7 * | 1-15 | INV. H04L9/08 |
| X | WO 2021/211315 A1 (GOOGLE LLC [US]) 21 October 2021 (2021-10-21) * paragraphs [0009], [0014] - [0022]; figures 1,2 * | 1-15 | |
| A | Anonymous: "RFC 7296 - Internet Key Exchange Protocol Version 2 (IKEv2)", , 1 October 2014 (2014-10-01), XP055243756, Retrieved from the Internet: URL:http://tools.ietf.org/html/rfc7296#page-58 [retrieved on 2016-01-21] * section 2.12 * | 3-5 | |
| A | JEONG IK RAE ET AL: "Pairwise Key Agreement Protocols Using Randomness Re-use Technique", THE KIPS TRANSACTIONS PART C, vol. 12C, no. 7, 1 December 2005 (2005-12-01), pages 949-958, XP093338921, DOI: https://doi.org/10.3745/KIPSTC.2005.12C.7.949 * section 4.2 * | 3-5 | TECHNICAL FIELDS SEARCHED (IPC) H04L |

The present search report has been drawn up for all claims

| Place of search | Date of completion of the search | Examiner |
|---|---|---|
| Munich | 3 December 2025 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7015

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2025

| Patent document cited in search report | Publication date | Patent family member(s) | Publication date |
|---|---|---|---|
| WO 2021211314 A1 | 21-10-2021 | CN 113841357 A | 24-12-2021 |
| | | EP 3942774 A1 | 26-01-2022 |
| | | JP 7569387 B2 | 17-10-2024 |
| | | JP 2023528576 A | 05-07-2023 |
| | | KR 20220164560 A | 13-12-2022 |
| | | US 2022124491 A1 | 21-04-2022 |
| | | WO 2021211314 A1 | 21-10-2021 |
| WO 2021211315 A1 | 21-10-2021 | CN 115039377 A | 09-09-2022 |
| | | DE 112021002319 T5 | 09-02-2023 |
| | | EP 3970314 A1 | 23-03-2022 |
| | | JP 2023521276 A | 24-05-2023 |
| | | KR 20230002286 A | 05-01-2023 |
| | | US 2023132742 A1 | 04-05-2023 |
| | | WO 2021211315 A1 | 21-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63667976